# EUROPEAN PATENT SPECIFICATION

(11) **EP 2 830 199 B1**
(45) Date of publication and mention of the grant of the patent: **15.03.2017**
(21) Application number: 14173884.9
(22) Date of filing: 25.06.2014
(51) Int. Cl.: H02K 11/00, F02N 19/00

(54) **Rotating electric machine and saddle-ride type vehicle**
Rotierende elektrische Maschine und Sattelfahrzeug
Machine électrique rotative et véhicule de type à selle

(30) Priority: 08.07.2013 JP 2013142838
(43) Date of publication of application: 28.01.2015
(73) Proprietor: Yamaha Hatsudoki Kabushiki Kaisha, Iwata-shi, Shizuoka 438-8501 (JP)
(72) Inventor: Furuta, Hideki, Shizuoka, 438-8501 (JP)
(74) Representative: Zimmermann, Tankred Klaus

(56) References cited:
- JP-A- 2004 227 696
- JP-A- 2011 091 966
- JP-A- 2013 102 667

## Description

### [TECHNICAL FIELD]

The present invention relates to a rotating electric machine, particularly a rotating electric machine that is suitable for use as a starter-generator provided in various types of vehicles including motorcycles, and also relates to a saddle-ride type vehicle provided with the rotating electric machine.
JP 2013-102667 A discloses an electric motor with a plurality of magnetic pieces, one of them presenting a notch.
JP 2011-091966 discloses an electric motor with an easily fixable sensor case body.

### [BACKGROUND ART]

A starter-generator has been known as a rotating electric machine that is mounted to an output shaft of an engine of, for example, a motorcycle. A starter-generator of this type is configured to, at a time of engine start, function as a starter motor that rotates a crankshaft to start the engine, while after the engine start, be rotated by the crankshaft to function as a generator. The rotating electric machine of this type includes a magnetic sensor unit that detects the angle of rotation of a rotor.

Particularly in a motorcycle or the like, only a very limited space is available for installation of a rotating electric machine that serves as a starter-generator mounted to an engine. This is why there is a demand that a rotating electric machine including a magnetic sensor unit be made smaller.

For example, Japanese Patent Application Laid-Open No. 2012-244855 proposes the following rotating electric machine. The rotating electric machine proposed therein includes a rotor that is in the shape of a cylinder with a bottom and fixed to one end portion of a crankshaft of an engine. The rotor includes a bottom wall portion having a disk-like shape and a peripheral wall portion having a cylindrical shape. The peripheral wall portion extends in the axial direction of the crankshaft from the bottom wall portion toward the engine. A permanent magnet is fixed to an inner circumferential surface of the peripheral wall portion. A stator is arranged inside the peripheral wall portion of the rotor. The stator includes a core part having a cylindrical shape, a plurality of teeth, and windings. The core part is fixed to a case of the engine. The plurality of teeth extend radially outward from the core part. The plurality of teeth are arranged at a constant pitch in a circumferential
direction. The windings are wound on the teeth.

A magnetic sensor unit provided in the rotating electric machine includes a case main body and a leg part. The case main body has a magnetic sensor element incorporated therein. The leg part extends from the case main body toward the stator. A guide element made from a strip-like metal plate which is a magnetic body is embedded in the leg part. The magnetic sensor element is arranged adjacent to a distal end portion of the guide element.

The magnetic sensor unit is arranged in such a manner that the case main body, which is placed between the stator and the engine, is fixed to the stator with the leg part being interposed between distal end portions of neighboring ones of the teeth.

Arranging the magnetic sensor unit in this manner causes main magnetic fluxes directed from the permanent magnet of the rotor toward the teeth to be guided to the magnetic sensor element by means of the guide element embedded in the leg part. The magnetic fluxes thus guided are detected by the magnetic sensor element that is arranged adjacent to the distal end portion of the guide element. Thereby, a signal indicating the detection of the rotational position of the rotor is obtained. Based on the detection signal, the rotating electric machine is controlled.

### [SUMMARY OF THE INVENTION]

It is an object of the present invention to provide a rotating electric machine suitable for use as a starter-generator that ensures detection of the rotational position of a rotor detected by a magnetic sensor element, with a simple structure and a small size.

This object is achieved by a rotating electric machine according to claim 1, and by a saddle-ride type vehicle according to claim 14.

The present invention is based on the following findings of the inventors. In the rotating electric machine proposed in Japanese Patent Application Laid-Open No. 2012-244855, it is necessary that the leg part is provided in the case main body and additionally the guide element is arranged in the leg part, in order that the main magnetic fluxes directed toward the teeth of the permanent magnet can be guided to the magnetic sensor element. Moreover, in order to detect the magnetic fluxes thus guided to the guide element, it is necessary that the magnetic sensor element is arranged in the case main body such that the magnetic sensor element is opposed and adjacent to an end portion of the guide element. This results in a complicated structure of the magnetic sensor unit.

In the technical background described above, there has been a demand for development of a rotating electric machine serving as a starter-generator that is able to maintain an accuracy of detection of the rotational position of a rotor detected by a magnetic sensor element, with a simple structure and a small size.

The above and other objects and advantageous effects of the present invention will become more apparent from the preferred embodiment described later.

In the following, a configuration of a rotating electric machine according to the present invention will be described.

A rotating electric machine according to a preferred embodiment of the present invention includes: a rotor configured to be fixed to an end portion of a rotation shaft part of an engine, the rotor being in the shape of a tube with a bottom; a stator arranged inside the rotor; and a magnetic sensor unit configured to detect a rotational position of the rotor. The stator includes a plurality of teeth that extend in a radial direction of the rotation shaft part, the plurality of teeth being arranged in a circumferential direction of the rotation shaft part. The rotor includes a bottom wall portion having a disk-like shape, a peripheral wall portion having a tubular shape, and a permanent magnet, the bottom wall portion being fixed to the rotation shaft part, the peripheral wall portion extending in an axial direction of the rotation shaft part from an outer circumferential edge of the bottom wall portion toward the engine, the permanent magnet being fixed to an inner circumferential surface of the peripheral wall portion. The magnetic sensor unit includes a case main body and a magnetic sensor element that is incorporated in the case main body. The permanent magnet includes an extension portion that extends in the axial direction toward the engine beyond an end surface at the engine side of the teeth. The magnetic sensor element is arranged closer to the engine than an end surface at the engine side of the extension portion of the permanent magnet is to the engine. The magnetic sensor element is arranged such that the magnetic sensor element is at least partially located within a range of ±g in the radial direction from an inner circumferential end surface of the permanent magnet, where g represents a gap length with respect to the radial direction between an outer circumferential end surface of the teeth and the inner circumferential end surface of the permanent magnet.

In the rotating electric machine mentioned above, the permanent magnet includes the extension portion that extends in the axial direction toward the engine beyond the end surface at the engine side of the teeth. This results in increased leakage magnetic fluxes being outputted from the permanent magnet, to ensure that the leakage magnetic fluxes are detected by the magnetic sensor element that is arranged closer to the engine than the end surface at the engine side of the extension portion of the permanent magnet is to the engine. This also results in a reduced influence of interference to magnetic fluxes of the permanent magnet from field magnetic fluxes that windings of the stator produce while the rotating electric machine is driving. Thus, the accuracy of detection can be kept high without a complicated structure.

It may be acceptable that: the magnetic sensor unit includes a position-settling leg part that extends from the case main body toward the teeth; and the position-settling leg part is in contact with the teeth so that the position of the magnetic sensor unit is settled with respect to the axial direction. This enables the position of the magnetic sensor element to be correctly settled with respect to the axial direction. Thus, the accuracy of detection can be kept further higher.

Preferably, the position-settling leg part is made from a non-magnetic body alone. Detecting the leakage magnetic fluxes outputted from the extension portion of the permanent magnet by means of the magnetic sensor element eliminates the need to provide a member that is made from a magnetic body and embedded in the position-settling leg part, which is otherwise needed in order to guide main magnetic fluxes outputted from the permanent magnet. This enables more simplification of the structure.

Preferably, the position-settling leg part is arranged at a position closer to the inner circumferential end surface of the permanent magnet than to the axis line of the rotation shaft part. This can further stabilize the settlement of the position of the magnetic sensor unit.

It may be acceptable that: the extension portion is provided in each of opposite end portions of the permanent magnet with respect to the circumferential direction, and a recessed portion is formed between the extension portions. The rotational position of the rotor can be detected with the extension portions. Forming the recessed portion reduces a material of the permanent magnet, resulting in a cost reduction.

It may be acceptable that: each tooth includes a pair of laterally protruding portions that extend in the circumferential direction from the distal end of the tooth with respect to the radial direction; and the position-settling leg part of the magnetic sensor unit is fitted between neighboring ones of the laterally protruding portions. This ensures that the position of the magnetic sensor unit is settled with respect to the circumferential direction, and therefore ensures that the position of the magnetic sensor element is settled with respect to the circumferential direction.

It may be acceptable that: the position-settling leg part includes a leg main portion and a latch portion that is provided to a distal end portion of the leg main portion, the latch portion having a width smaller than the width of the leg main portion; the latch portion is fitted between, among the laterally protruding portions formed in pairs, the laterally protruding portions neighboring each other with respect to the circumferential direction, so that the position of the case main body is settled with respect to the circumferential direction; and a step portion provided at the boundary between the leg main portion and the latch portion is latched to the neighboring ones of the laterally protruding portions formed in pairs, to hinder movement of the case main body in the axial direction. This ensures that the position of the magnetic sensor unit is settled with respect to the axial direction, and therefore ensures that the position of the magnetic sensor element is settled with respect to the axial direction.

A Hall IC of switching type is adoptable as the magnetic sensor element.

It may be acceptable that the axial dimension of the extension portion of the permanent magnet is set equal to or greater than a dimension equivalent to the thickness of the permanent magnet.

Another embodiment of the present invention provides a saddle-ride type vehicle including an engine and a rotating electric machine with any of the above-mentioned features.

### [BRIEF DESCRIPTION OF THE DRAWINGS]

FIG. 1 is a cross-sectional view schematically showing a state where a rotating electric machine according to an embodiment of the present invention is mounted to an engine.
FIG. 2 is a perspective view of the rotating electric machine.

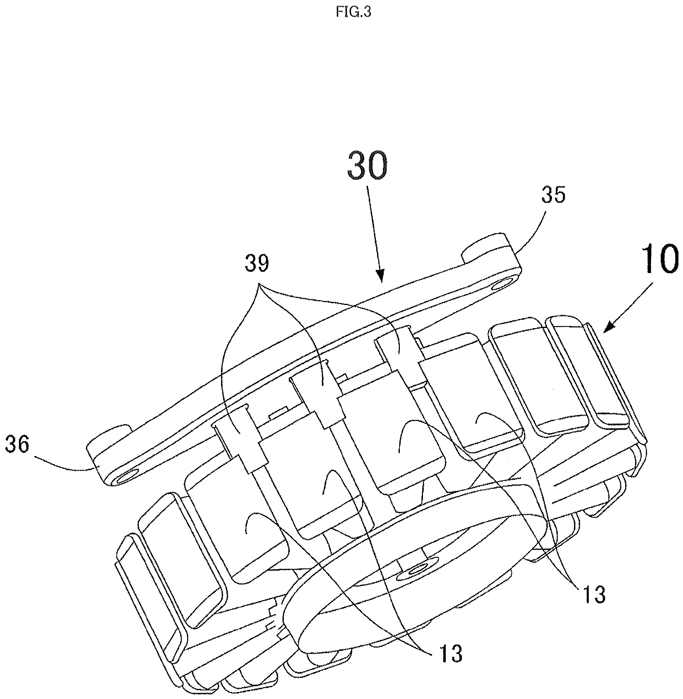

FIG. 3 is a perspective view showing a state where a magnetic sensor unit is assembled to a stator of the rotating electric machine.
FIG. 4 is a perspective view of the magnetic sensor unit.
FIG. 5 is a plan view showing the positional relationship between the magnetic sensor unit and the stator.

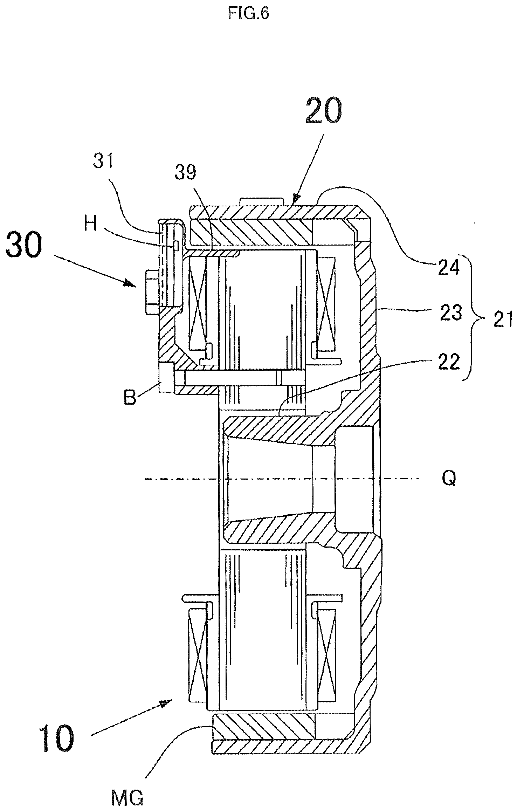

FIG. 6 is a cross-sectional view of the rotating electric machine.
FIG. 7 is a side view showing a state where the magnetic sensor unit is fixed to the stator.
FIG. 8 is an overall perspective view of a permanent magnet of a rotor of the rotating electric machine.
FIG. 9 is a cross-sectional view showing, on an enlarged scale, a magnetic sensor element and therearound.

### [EMBODIMENTS FOR CARRYING OUT THE INVENTION]

Hereinafter, the present invention will be described based on a preferred embodiment with reference to the drawings.

A rotating electric machine according to this embodiment is suitable for use as a starter-generator SG that is mounted to an engine of various types of vehicles including saddle-ride type vehicles such as a motorcycle having an idling stop function. The rotating electric machine serving as the starter-generator SG is coupled to a crankshaft of the engine, and, at a time of engine start, functions as a starter motor that rotates the crankshaft to start the engine. After the engine start, the rotating electric machine is rotated by the crankshaft, to function as a generator. Applications of the present invention are not limited to a starter-generator for an engine unit of a saddle-ride type vehicle. The present invention is applicable to various types of rotating electric machines.

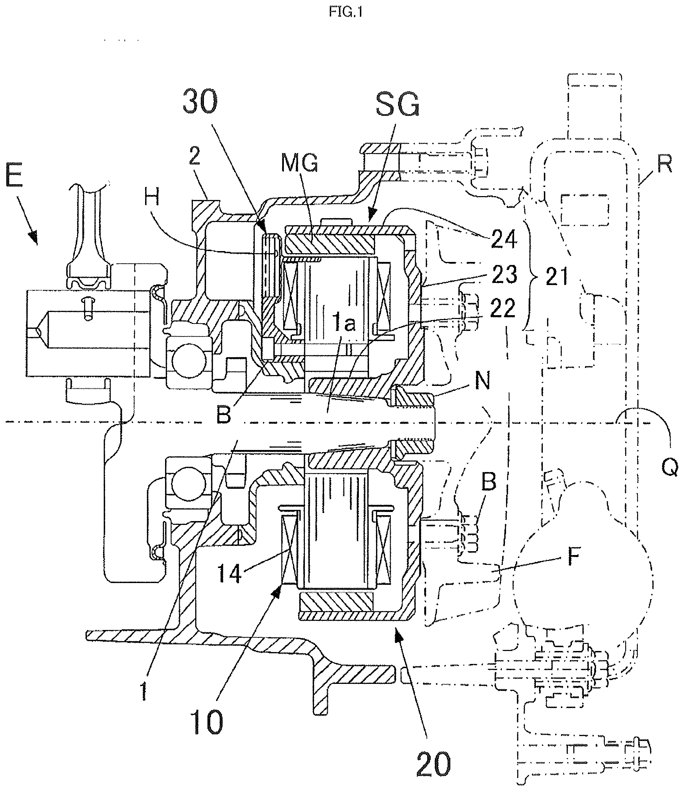

As shown in FIG. 1, the rotating electric machine serving as the starter-generator SG according to this embodiment is mounted directly to one end portion of a crankshaft 1 that serves as a rotation shaft part of an engine E. Here, it should be noted that the rotating electric machine of the present invention does not always need to be mounted directly to the crankshaft 1 of the engine E. In an alternative example, the rotating electric machine may be coupled indirectly to the crankshaft 1 with interposition of a speed reduction mechanism. The engine E includes an engine case 2 that supports the crankshaft 1 in a freely rotatable manner.

One end portion 1a (in FIG. 1, a right end portion) of the crankshaft 1 extends out of the engine case 2 so that it protrudes outward. The starter-generator SG is mounted to the one end portion 1a of the crankshaft 1. The starter-generator SG constitutes the rotating electric machine of the present invention. A radiator R is arranged outside the starter-generator SG.

In the following, a detailed description will be given of a specific configuration of a rotating electric machine serving as the starter-generator SG. As shown in FIG. 1, the rotating electric machine includes a stator 10, a rotor 20, and a magnetic sensor unit 30 configured to detect the rotational position of the rotor 20.

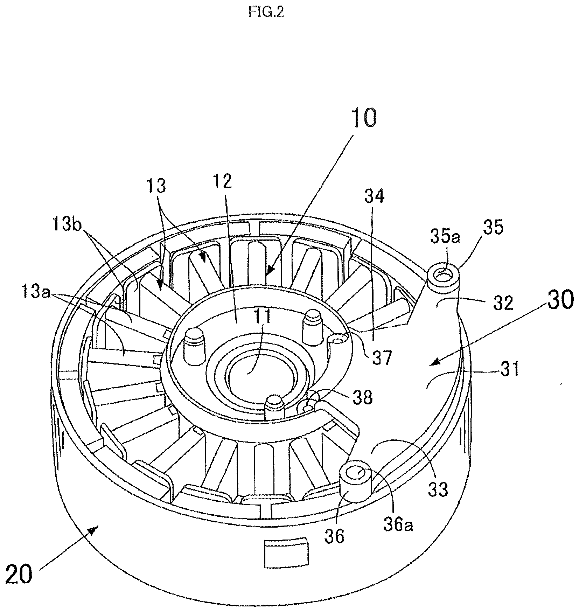

Referring to FIGS. 1 and 2, the rotor 20 includes a rotor main body 21 and a permanent magnet MG. The rotor main body 21 is, for example, in the shape of a cylinder with a bottom and made of a ferromagnetic material. The rotor main body 21 is configured to rotate on a rotation axis line Q. The rotor main body 21 includes a shaft-fixing boss portion 22 having a cylindrical shape, a bottom wall portion 23 having a disk-like shape, and a peripheral wall portion 24 having a tubular shape. The shaft-fixing boss portion 22 is fixed to the crankshaft 1 with the one end portion 1a of the crankshaft 1 being received in the shaft-fixing boss portion 22. The bottom wall portion 23, which is formed integrally with the boss portion 22, extends in a radial direction Y of the crankshaft 1. The peripheral wall portion 24 extends in an axial direction of the crankshaft 1 from an outer circumferential edge of the bottom wall portion 23 toward the engine E.

The one end portion 1a of the crankshaft 1 is received in the boss portion 22, and in this condition, a nut N is screwed onto a male thread formed in a distal end portion of the one end portion 1a of the crankshaft 1, as shown in FIG. 1. Thereby, the boss portion 22 is fastened and fixed to the crankshaft 1 such that the boss portion 22 is not rotatable relative to the crankshaft 1. Accordingly, the rotor main body 21, together with the crankshaft 1, rotates on the rotation axis line Q. As shown in FIG. 1, a cooling fan F is fixed to the exterior the bottom wall portion 23 of the rotor main body 21 by means of a plurality of bolts B.

The permanent magnet MG is fixed to an inner circumferential surface of the peripheral wall portion 24 of the rotor main body 21. The permanent magnet MG is arranged in such a manner that the N pole and the S pole alternately appear with respect to a circumferential direction of the rotor main body 21. The permanent magnet MG may be one including a plurality of sintered magnet pieces arranged in the circumferential direction. Instead of a sintered magnet, a magnet such as a Neodymium bonded magnet may also be adoptable that is obtained by solidifying a mixture of a powdered magnet and a plastic resin into a cylindrical shape and then magnetizing a resultant such that the N magnetic pole and the S magnetic pole alternately appear with respect to a circumferential direction as described above. In the present invention, the type of the permanent magnet, the shape of the permanent magnet, the number of magnetic poles of the permanent magnet, and the like, are not limited to the ones illustrated in this embodiment.

The rotor 20, which is mounted directly to the crankshaft 1 and configured to rotate together with the crankshaft 1 in the above-described manner, also functions as a flywheel of the engine E.

Referring to FIG. 2, the stator 10 is arranged concentrically within the rotor 20 having a cylindrical shape. The stator 10 is obtained by, for example, thin silicon steel plates being stacked in the axial direction of the crankshaft 1. As shown in FIG. 2, the stator 10 includes a cylindrical core part 12 and a plurality of teeth 13. The cylindrical core part 12 has, in its central portion, a hole portion 11 whose inner diameter is larger than the outer diameter of the tubular boss portion 22 of the rotor 20. The plurality of teeth 13, which serve as salient poles, integrally extend radially outward from the core part 12. Each tooth 13 includes a main portion 13a and a pair of laterally protruding portions 13b provided at the distal end of the main portion 13a. The laterally protruding portions 13b extend in opposite directions with respect to a circumferential direction. As shown in FIG. 1, an armature winding 14 is wound around the main portion 13a of each tooth 13. In FIG. 2 and other drawings, for convenience of the illustration, the winding 14 is not shown.

Referring to FIG. 1, the magnetic sensor unit 30 is arranged closer to the engine E than the rotor 20 and the stator 10 are to the engine. The magnetic sensor unit 30 is configured to detect the rotational position of the rotor 20. The magnetic sensor unit 30 has a plurality of magnetic sensor elements H incorporated therein.

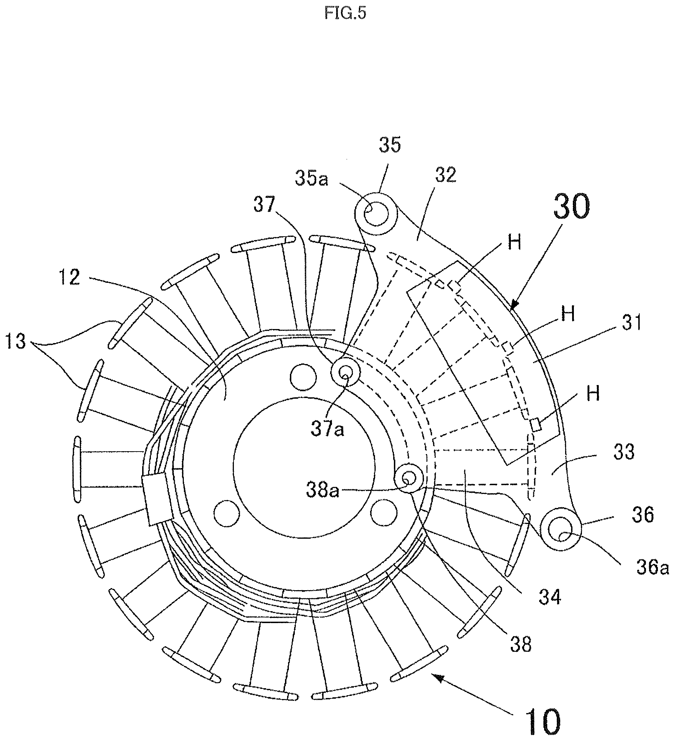

Referring to FIG. 5, the magnetic sensor unit 30 includes a case main body 31 in which the plurality of magnetic sensor elements H are incorporated. No particular limitation is put on the magnetic sensor element H. An illustrative example thereof is a Hall element. Using a Hall IC of switching type is especially advantageous in terms of the cost.

A first extension portion 32, a second extension portion 33, and an inward extension portion 34, which are integral with the case main body 31, extend out from the case main body 31. As shown in FIG. 5, each of the first extension portion 32 and the second extension portion 33 extend from the case main body 31 in the circumferential direction of the stator 10. The inward extension portion 34 extends from the case main body 31 in a direction radially inward of the stator 10. A first outer fixing portion 35 having a fastener reception hole 35a and a second outer fixing portion 36 having a fastener reception hole 36a are provided in end portions of the first extension portion 32 and the second extension portion 33, respectively. A first inner fixing portion 37 having a fastener reception hole 37a and a second inner fixing portion 38 having a fastener reception hole 38a are provided in an inner peripheral edge portion of the inward extension portion 34.

The first and second outer fixing portions 35 and 36 are used for fixing the magnetic sensor unit 30 to the engine E. The first and second inner fixing portions 37 and 38 are used for fixing the magnetic sensor unit 30 to the stator 10 of the rotating electric machine.

More specifically, as shown in FIGS. 2 and 5, the first and second inner fixing portions 37 and 38 are fastened and fixed to the core part 12 of the stator 10 by means of bolts B (see FIG. 1) that are received through the fastener reception holes 37a and 38a. In this embodiment, the magnetic sensor unit 30 is fixed to the stator 10 at two points in total. The two points are located in opposite end regions of the inner peripheral edge portion of the inward extension portion 34 with respect to the circumferential direction. Under the state where the magnetic sensor unit 30 is mounted to the stator 10 in the above-described manner, the first and second outer fixing portions 35 and 36 are located radially outside of the outer circumferential edge of the stator 10. The first and second outer fixing portions 35 and 36 are fastened and fixed to the engine case 2 of the engine E by means of bolts that are received through the fastener reception holes 35a and 36a.

In this embodiment, as described above, the magnetic sensor unit 30 is fixed to the stator 10 in the first and second inner fixing portions 37 and 38. As a result, the position of the case main body 31, and therefore the position of each of the magnetic sensor elements H incorporated therein, is settled with respect to the radial direction and the circumferential direction of the stator 10. The magnetic sensor unit 30 is fixed to the engine case 2 of the engine E in the first and second outer fixing portions 35 and 36. As a result, the position of each of the magnetic sensor elements H is settled with respect to the axial direction of the crankshaft 1, too.

Sometimes, for example in a case where the magnetic sensor unit 30 is made of a resin or the like being integrally molded or in a case where the magnetic sensor unit 30 is thin, the rigidity thereof may be poor. In such a case, vibrations of the engine E or the like may cause the case main body 31 having the magnetic sensor elements H incorporated therein to vibrate, resulting in a change in the relative positions between the magnetic sensor elements H and the rotor 20 with respect to the axial direction. The change in the relative positions affects the accuracy of detection of the rotational position of the rotor 20 detected by the magnetic sensor elements H.

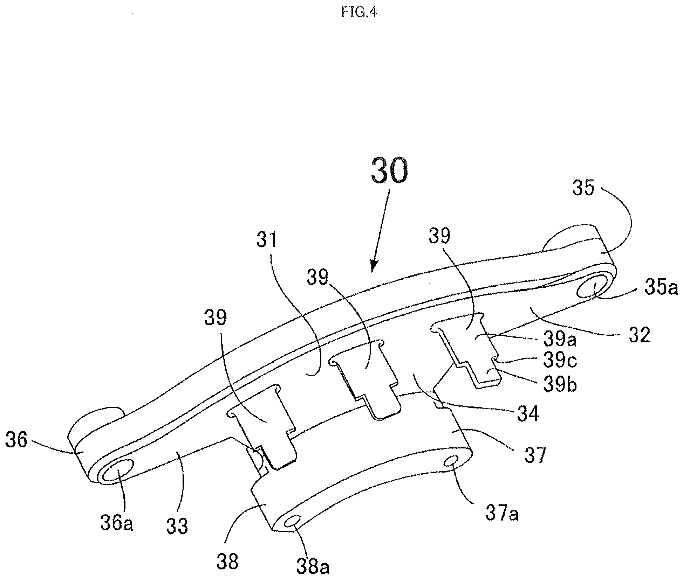

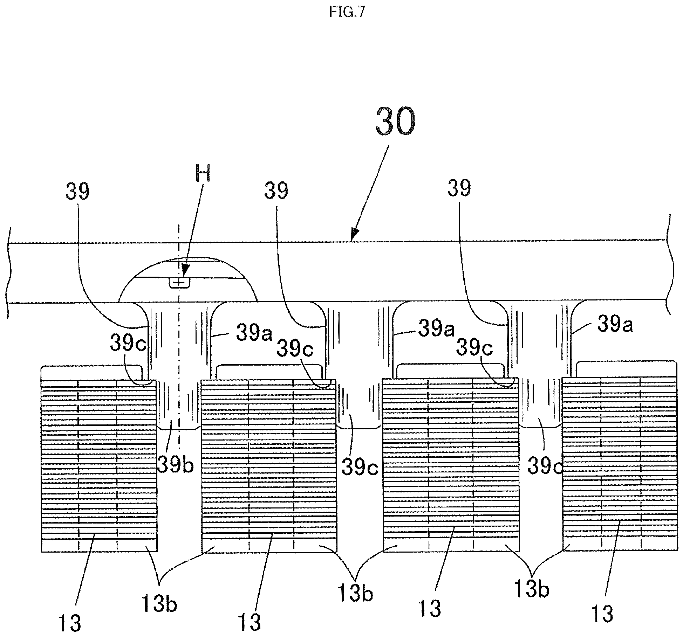

Therefore, in this embodiment, as shown in FIG. 4, three leg parts 39 are provided in total. The leg parts 39 are arranged side by side with respect to the circumferential direction. The leg parts 39 extend toward the stator 10 from a surface of the case main body 31 opposed to the stator 10. Each leg part 39 includes a leg main portion 39a and a latch portion 39b provided to a distal end portion of the leg main portion 39a. The latch portion 39b has a width smaller than the width of the leg main portion 39a. A step portion 39c is formed at the boundary between the leg main portion 39a and the latch portion 39b of each leg part 39. As shown in FIG. 7, under the state where the magnetic sensor unit 30 is mounted to the stator 10, the latch portion 39b of each leg part 39 is fitted between the laterally protruding portions 13b of neighboring teeth 13. Thus, the position of the case main body 31 is settled with respect to the circumferential direction. Additionally, the step portion 39c formed at the boundary between the leg main portion 39a and the latch portion 39b is latched to neighboring laterally protruding portions 13b. Thus, the position of the case main body 31 is settled with respect to the axial direction, and consequently the positions of the magnetic sensor elements H incorporated in the case main body 31 are settled with respect to the axial direction.

Providing the leg parts 39 can further ensure that the position of the case main body 31 is settled with respect to the circumferential direction and the axial direction. This ensures that the magnetic sensor elements H incorporated in the case main body 31 are held in expected positions even when, for example, vibrations of the engine E occur. Accordingly, even in a case where, for example, the case main body 31 is thinned so that its rigidity is reduced, the accuracy of detection performed by the magnetic sensor elements H can be kept high. As a result, further thinning of the magnetic sensor unit 30 is allowed.

Under the state where the magnetic sensor unit 30 is mounted to the stator 10 in the above-described manner, the first and second outer fixing portions 35 and 36 are located outside the case main body 31 with respect to the circumferential direction, as shown in FIG. 5. To be more specific, the locations of the first and second outer fixing portions 35 and 36 are further outside, with respect to the circumferential direction, of the location of, among the plurality of magnetic sensor elements H incorporated in the case main body 31, the magnetic sensor element H located outermost with respect to the circumferential direction. Each of the first and second outer fixing portions 35 and 36 is arranged at a position adjacent to the distal end portion of a corresponding tooth 13 of the stator 10. In other words, the first and second outer fixing portions 35 and 36 are arranged in such a manner that they do not protrude radially outward from the stator 10 to a large extent.

The first and second outer fixing portions 35 and 36 have the fastener reception holes 35a and 36a through which bolts are received, as mentioned above. The bolts are magnetized by magnetic fluxes of the permanent magnet MG of the rotor 20 and magnetic fluxes of the windings 14 of the stator 10. This is why the first and second outer fixing portions 35 and 36 are desirably positioned at as great a distance from the magnetic sensor elements H as possible. In this embodiment, with respect to the circumferential direction, the location of the first and second outer fixing portions 35 and 36 are further outside the location of, among the plurality of magnetic sensor elements H, the magnetic sensor element H located outermost with respect to the circumferential direction, as described above.

Accordingly, the outer fixing portions 35 and 36 are positioned at a sufficient distance from the magnetic sensor elements H. This can reduce an influence received from magnetization of the bolts serving as fasteners. Additionally, the outer fixing portions 35 and 36 are provided in the extension portions 32 and 33 that extend in the circumferential direction from the case main body 31. This can prevent the outer fixing portions 35 and 36 from protruding in the radial direction which undesirably causes a size increase. Thus, this embodiment achieves an improvement in the accuracy of detection without causing an increase in the size of the magnetic sensor unit 30.

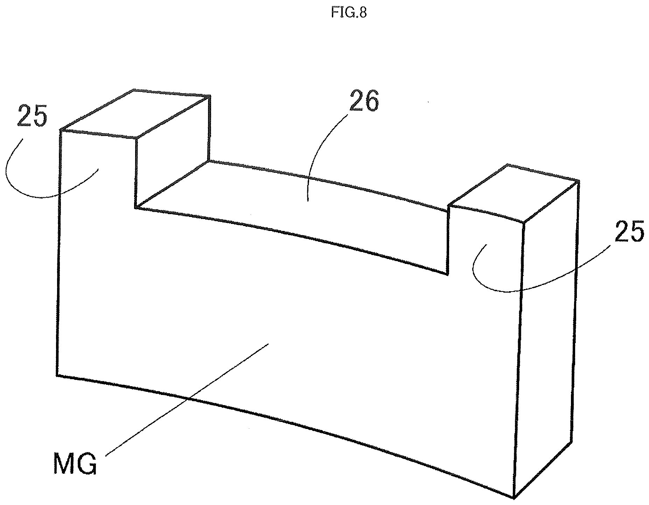

Referring to FIG. 8, the permanent magnet MG, which is attached to the rotor 20 of the rotating electric machine according to this embodiment, includes a pair of extension portions 25 that extend toward the engine E. The pair of extension portions 25 are formed in opposite end portions of the permanent magnet MG with respect to the circumferential direction. A recessed portion 26 is formed between the extension portions 25. One of the extension portions 25 with respect to the circumferential direction generates magnetic fluxes that correspond to production of a detection pulse necessary for rotating the rotor 20 in the normal direction. The other extension portion 25 generates magnetic fluxes that correspond to production of a detection pulse necessary for once rotating the rotor 20 in the reverse direction to exert the swing-back function. In this embodiment, as mentioned above, the recessed portion 26 is formed between the extension portions 25, which allows a reduction in a material of the permanent magnet MG, resulting in a reduction in the cost of the material.

In the present invention, however, forming the extension portions 25 in the opposite end portions of the permanent magnet MG with respect to the circumferential direction as illustrated in this embodiment may not be indispensable. For example, in a case where the engine E is not provided with the swing-back function, it may be acceptable that the extension portion 25 is formed only in one end portion with respect to the circumferential direction. It may be also acceptable that the extension portion 25 is formed so as to extend continuously throughout the circumferential length of the permanent magnet MG, that is, it may be also acceptable that the above-mentioned recessed portion 26 is not formed.

The extension portions 25 of the permanent magnet MG, which extend toward the engine E as described above, are placed with effective use of a conventionally existing dead space that is produced due to protruding of the windings 14 of the stator 10 toward the engine E. Accordingly, the axial dimension of a main body of the rotating electric machine can be suppressed to the degree similar to or only slightly greater than that obtained when the extension portions 25 are not formed in the permanent magnet MG as in the conventional technique. In this embodiment, the axial dimension L of the extension portion 25 is set substantially equal to the thickness of the permanent magnet MG. For example, when the permanent magnet MG has a thickness of 6 mm, the axial dimension L of the extension portion 25 is set to 5 to 6 mm.

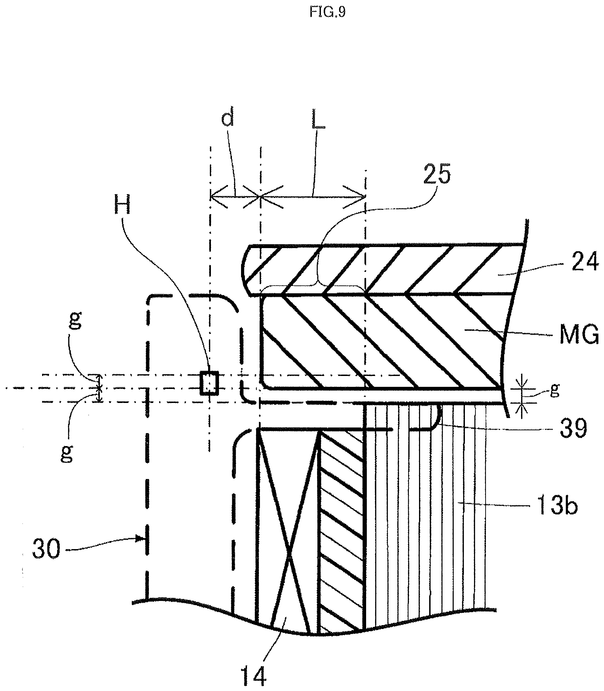

Referring to FIG. 9, the magnetic sensor element H is arranged at distance d toward the engine E from an end surface at the engine E side of the extension portion 25 of the permanent magnet MG. In the present invention, no particular limitation is put on the distance d. From the viewpoint of ensuring detection of leakage magnetic fluxes outputted from the extension portion 25 of the permanent magnet MG, it is desirable that the magnetic sensor element H is arranged adjacent to the end surface at the engine E side of the extension portion 25 of the permanent magnet MG. In consideration of a mounting tolerance between the rotor main body 21 and the crankshaft 1 in the axial direction, vibrations, and the like, it is desirable that the magnetic sensor unit 30 is arranged adjacent to, but not in mechanical contact with, a component part of the rotor 20. In this embodiment, the distance d between the magnetic sensor element H and the end surface at the engine E side of the extension portion 25 of the permanent magnet MG is set to about 3.5 to 4.0 mm.

Assuming that a gap length with respect to the radial direction between an outer circumferential end surface of the teeth 13 and an inner circumferential end surface of the permanent magnet MG is defined as g, the position of the magnetic sensor element H with respect to the radial direction is set as follows. The magnetic sensor element H is arranged such that it is at least partially located within a range of ±g in the radial direction from the inner circumferential end surface of the permanent magnet MG. Arranging the magnetic sensor element H within such a range can ensure detection of leakage magnetic fluxes outputted from the extension portion 25 of the permanent magnet MG, thus maintaining a high accuracy of detection.

In the present invention, as thus far described, the magnetic sensor element H detects leakage magnetic fluxes outputted from the extension portion 25 of the permanent magnet MG. This eliminates the need to provide a guide element that is made from a magnetic body and embedded in the position-settling leg part 39, which is otherwise needed in order to guide main magnetic fluxes outputted from the permanent magnet MG. Therefore, complication of the configuration is avoided. Additionally, adoption of the configuration in which the extension portions 25 are provided to the permanent magnet MG so that leakage magnetic fluxes outputted therefrom are detected is able to reduce interference from field magnetic fluxes that the windings 14 of the stator 10 produce while the rotating electric machine is driving.

As is clear from the description of the embodiment above, the rotating electric machine according to the embodiment of the present invention makes use of a space, which conventionally has not been used effectively, to make the permanent magnet MG extend in the axial direction to form the extension portion 25, so that leakage magnetic fluxes outputted from the extension portion 25 are detected by the magnetic sensor element H. This enables a size reduction without an increase in the axial dimension.

Moreover, it is not necessary, either, that the leg part is extended from the magnetic sensor unit and a guide element made from a magnetic body is provided in the leg part. This enables simplification of the structure. Furthermore, since the case main body 31 of the magnetic sensor unit adopted herein has a planar shape, detection of the rotational position of the rotor can be ensured without an increase in the axial dimension. Still furthermore, since the extension portions 25 extending toward the engine E are provided to the permanent magnet MG, detection of leakage magnetic fluxes outputted from the extension portions 25 can be ensured even though the windings 14 produce field magnetic fluxes while the rotating electric machine is driving. This achieves an improvement in the accuracy of detection, with a simple structure.

The present invention is suitable for use as a starter-generator that is mounted to an engine of a motorcycle. However, applications of the present invention are not limited to a rotating electric machine serving as the starter-generator of this type. The present invention is applicable to various types of rotating electric machines included in various types of vehicles other than motorcycles.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### [INDUSTRIAL APPLICABILITY]

The present invention is suitable for use as a rotating electric machine serving as a starter-generator that is mounted to an engine of, for example, a motorcycle.

### [DESCRIPTION OF THE REFERENCE SIGNS]

- 1: crankshaft
- 1a: one end portion
- 2: engine case
- 10: stator
- 12: core part
- 13: tooth
- 13b: laterally protruding portion
- 20: rotor
- 21: rotor main body
- 24: peripheral wall portion
- 25: extension portion
- 30: magnetic sensor unit
- 31: case main body
- 32: first extension portion
- 33: second extension portion
- 34: inward extension portion
- 35: first outer fixing portion
- 36: second outer fixing portion
- 37: first inner fixing portion
- 38: second inner fixing portion
- 39: leg part
- 39a: leg main portion
- 39b: latch portion
- 39c: step portion
- E: engine
- H: magnetic sensor element
- MG: permanent magnet
- Q: rotation axis line
- SG: rotating electric machine

## Claims

1. A rotating electric machine comprising:
a rotor (20) configured to be fixed to an end portion of a rotation shaft part (1) of an engine (E), the rotor (20) being in the shape of a tube with a bottom;
a stator (10) arranged inside the rotor (20); and
a magnetic sensor unit (30) configured to detect a rotational position of the rotor (20),
the stator (10) including a plurality of teeth (13) that extend in a radial direction of the rotation shaft part (1), the plurality of teeth (13) being arranged in a circumferential direction of the rotation shaft part (1),
the rotor (20) including a bottom wall portion (23) having a disk-like shape, a peripheral wall portion (24) having a tubular shape, and a permanent magnet (MG), the bottom wall portion (23) being fixed to the rotation shaft part (1), the peripheral wall portion (24) extending in an axial direction of the rotation shaft part (1) from an outer circumferential edge of the bottom wall portion (23) toward the engine (E), the permanent magnet (MG) being fixed to an inner circumferential surface of the peripheral wall portion (24),
the magnetic sensor unit (30) including a case main body (31) and a magnetic sensor element (H) that is incorporated in the case main body (31),
**characterised by**
the permanent magnet (MG) including an extension portion (25) that extends in the axial direction toward the engine (E) beyond an end surface at an engine side of the teeth (13),
the magnetic sensor element (H) being arranged closer to the engine (E) than an end surface at the engine side of the extension portion (25) of the permanent magnet (MG) is to the engine (E),
the magnetic sensor element (H) is arranged such that the magnetic sensor element (H) is at least partially located within a range of ±g in the radial direction from an inner circumferential end surface of the permanent magnet (MG), where g represents a gap length with respect to the radial direction between an outer circumferential end surface of the teeth (13) and the inner circumferential end surface of the permanent magnet (MG).

2. The rotating electric machine according to claim 1, wherein
the magnetic sensor unit (30) includes a position-settling leg part (39) that extends from the case main body (31) toward the teeth (13),
the position-settling leg part (39) is in contact with the teeth (13) so that the position of the magnetic sensor unit (30) is settled with respect to the axial direction.

3. The rotating electric machine according to claim 2, wherein
the position-settling leg part (39) is made from a non-magnetic body alone.

4. The rotating electric machine according to claim 2 or 3, wherein
the position-settling leg part (39) is arranged at a position closer to the inner circumferential end surface of the permanent magnet (MG) than to the axis line of the rotation shaft part (1).

5. The rotating electric machine according to any one of claims 1 to 4, wherein
the extension portion (25) is provided in each of opposite end portions of the permanent magnet (MG) with respect to the circumferential direction, and a recessed portion (26) is formed between the extension portions (25).

6. The rotating electric machine according to claim 2, wherein
each tooth (13) includes a pair of laterally protruding portions (13b) that extend in the circumferential direction from the distal end of the tooth (13) with respect to the radial direction,
the position-settling leg part (39) of the magnetic sensor unit (30) is fitted between neighboring ones of the laterally protruding portions (13b) formed in pairs.

7. The rotating electric machine according to claim 6, wherein
the position-settling leg part (39) includes a leg main portion (39a) and a latch portion (39b) that is provided to a distal end portion of the leg main portion (39a), the latch portion (39b) having a width smaller than the width of the leg main portion (39a),
the latch portion (39b) is fitted between, among the laterally protruding portions (13b) formed in pairs, the laterally protruding portions (13b) neighboring each other with respect to the circumferential direction, so that the position of the case main body (31) is settled with respect to the circumferential direction,
a step portion (39c) provided at the boundary between the leg main portion (39a) and the latch portion (39b) is latched to the neighboring ones of the laterally protruding portions (13b) formed in pairs, to hinder movement of the case main body (31) in the axial direction.

8. The rotating electric machine according to any one of claims 1 to 7, wherein
the magnetic sensor element (H) is a Hall IC of switching type.

9. The rotating electric machine according to any one of claims 1 to 8, wherein
the axial dimension of the extension portion (25) of the permanent magnet (MG) is greater than a dimension equivalent to the thickness of the permanent magnet (MG).

10. The rotating electric machine according to any one of claims 1 to 9, wherein
the magnetic sensor unit (30) further includes:
an outer fixing portion (35, 36) for fixing the case main body (31) to the engine case; and
an inner fixing portion (37, 38) for fixing the case main body (31) to the stator (10),
with respect to a radial direction of the stator (10), the outer fixing portion (35, 36) is arranged outside an outer circumferential edge of the stator (10), while with respect to the circumferential direction, the outer fixing portion (35, 36) is arranged outside the magnetic sensor element (H) that is located outermost with respect to the circumferential direction.

11. The rotating electric machine according to claim 10, wherein
the outer fixing portion (35, 36) is formed in the shape of an extension portion (25) that extends in the circumferential direction from the case main body (31).

12. The rotating electric machine according to claim 10, wherein
the outer fixing portion (35, 36) includes a first outer fixing portion (35) provided in a first extension portion (32) and a second outer fixing portion (36) provided in a second extension portion (33), the first extension portion (32) extending from the case main body (31) toward one direction in the circumferential direction, the second extension portion (33) extending from the case main body (31) toward the other direction in the circumferential direction.

13. The rotating electric machine according to claim 10, wherein
the magnetic sensor unit (30) includes an inward extension portion (34) that extends from the case main body (31) inwardly with respect to the radial direction,
the inner fixing portion (37, 38) is provided in an inner peripheral edge portion of the inward extension portion (34).

14. A saddle-ride type vehicle comprising:
an engine (E); and
the rotating electric machine (SG) according to any one of claims 1 to 13.

## Patentansprüche

1. Eine drehende elektrische Maschine, die folgende Merkmale aufweist:
einen Rotor (20), der dazu konfiguriert ist, an einem Endabschnitt eines Drehwellenteils (1) eines Motors (E) befestigt zu werden, wobei der Rotor (20) in Form einer Röhre mit einem unteren Ende vorliegt;
einen in dem Rotor (20) angeordneten Stator (10); und
eine Magnetsensoreinheit (30), die dazu konfiguriert ist, eine Drehposition des Rotors (20) zu erfassen,
wobei der Stator (10) eine Mehrzahl von Zähnen (13) aufweist, die sich in einer radialen Richtung des Drehwellenteils (1) erstrecken, wobei die Mehrzahl von Zähnen (13) in einer Umfangsrichtung des Drehwellenteils (1) angeordnet ist,
wobei der Rotor (20) einen unteren Wandabschnitt (23) mit einer scheibenartigen Form, einen Umfassungswandabschnitt (24) mit einer Röhrenform und einen Permanentmagneten (MG) aufweist, wobei der untere Wandabschnitt (23) an dem Drehwellenteil (1) befestigt ist, wobei sich der Umfassungswandabschnitt (24) in einer axialen Richtung des Drehwellenteils (1) von einer äußeren Umfangskante des unteren Wandabschnitts (23) zu dem Motor (E) hin erstreckt, wobei der Permanentmagnet (MG) an einer Innenumfangsoberfläche des Umfassungswandabschnitts (24) befestigt ist,
wobei der Magnetsensor (30) einen Gehäusehauptkörper (31) und ein Magnetsensorelement (H), das in den Gehäusehauptkörper (31) integriert ist, umfasst,
**dadurch gekennzeichnet, dass**
der Permanentmagnet (MG) einen Erstreckungsabschnitt (25) umfasst, der sich in der axialen Richtung zu dem Motor (E) hin und über eine Endoberfläche auf einer Motorseite der Zähne (13) hinaus erstreckt,
das Magnetsensorelement (H) in größerer Nähe zu dem Motor (E) angeordnet ist als eine Endoberfläche auf der Motorseite des Erstreckungsabschnitts (25) des Permanentmagneten (MG) zu dem Motor (E) liegt,
das Magnetsensorelement (H) derart angeordnet ist, dass sich das Magnetsensorelement (H) zumindest teilweise innerhalb einer Bandbreite von ±g in der radialen Richtung von einer Innenumfangsendoberfläche des Permanentmagneten (MG) befindet, wobei g eine Zwischenraumlänge bezüglich der radialen Richtung zwischen einer Außenumfangsendoberfläche der Zähne (13) und der Innenumfangsendoberfläche des Permanentmagneten (MG) darstellt.

2. Die drehende elektrische Maschine gemäß Anspruch 1, bei der
die Magnetsensoreinheit (30) ein Positionseinstellungsbeinteil (39) umfasst, das sich von dem Gehäusehauptkörper (31) zu den Zähnen (13) hin erstreckt,
das Positionseinstellungsbeinteil (39) in Kontakt mit den Zähnen (13) steht, so dass die Position der Magnetsensoreinheit (30) bezüglich der axialen Richtung eingestellt wird.

3. Die drehende elektrische Maschine gemäß Anspruch 2, bei der
das Positionseinstellungsbeinteil (39) allein aus einem nicht-magnetischen Körper hergestellt ist.

4. Die drehende elektrische Maschine gemäß Anspruch 2 oder 3, bei der
das Positionseinstellungsbeinteil (39) in einer Position angeordnet ist, die eine größere Nähe zu der Innenumfangsendoberfläche des Permanentmagneten (MG) aufweist als zu der Achsenlinie des Drehwellenteils (1).

5. Die drehende elektrische Maschine gemäß einem der Ansprüche 1 bis 4, bei der der Erstreckungsabschnitt (25) in jedem gegenüberliegender Endabschnitte des Permanentmagneten (MG) bezüglich der Umfangsrichtung vorgesehen ist und zwischen den Erstreckungsabschnitten (25) ein ausgesparter Abschnitt (26) gebildet ist.

6. Die drehende elektrische Maschine gemäß Anspruch 2, bei der
jeder Zahn (13) ein Paar lateral vorspringender Abschnitte (13b) umfasst, die sich in der Umfangsrichtung von dem distalen Ende des Zahns (13) bezüglich der radialen Richtung erstrecken,
das Positionseinstellungsbeinteil (39) der Magnetsensoreinheit (30) zwischen benachbarte der paarweise gebildeten, lateral vorspringenden Abschnitte (13b) eingepasst ist.

7. Die drehende elektrische Maschine gemäß Anspruch 6, bei der
das Positionseinstellungsbeinteil (39) einen Beinhauptabschnitt (39a) und einen Arretierungsabschnitt (39b), der einem distalen Endabschnitt des Beinhauptabschnitts (39a) bereitgestellt ist, umfasst, wobei der Arretierungsabschnitt (39b) eine geringere Breite aufweist als der Beinhauptabschnitt (39a),
der Arretierungsabschnitt (39b) zwischen den paarweise gebildeten, lateral vorspringenden Abschnitten (13b) eingepasst ist, wobei die lateral vorspringenden Abschnitte (13b) bezüglich der Umfangsrichtung zueinander benachbart sind, so dass die Position des Gehäusehauptkörpers (31) bezüglich der Umfangsrichtung eingestellt ist,
ein Stufenabschnitt (39c), der an der Grenze zwischen dem Beinhauptabschnitt (39a) und dem Arretierungsabschnitt (39b) vorgesehen ist, an den benachbarten der paarweise gebildeten, lateral vorspringenden Abschnitte (13b) arretiert ist, um eine Bewegung des Gehäusehauptkörpers (31) in der axialen Richtung zu behindern.

8. Die drehende elektrische Maschine gemäß einem der Ansprüche 1 bis 7, bei der das Magnetsensorelement (H) eine integrierte Hall-Schaltung eines Schalttyps ist.

9. Die drehende elektrische Maschine gemäß einem der Ansprüche 1 bis 8, bei der
die axiale Abmessung des Erstreckungsabschnitts (25) des Permanentmagneten (MG) größer ist als eine Abmessung, die äquivalent zu der Dicke des Permanentmagneten (MG) ist.

10. Die drehende elektrische Maschine gemäß einem der Ansprüche 1 bis 9, bei der die Magnetsensoreinheit (30) ferner folgende Merkmale umfasst:
einen äußeren Befestigungsabschnitt (35, 36) zum Befestigen des Gehäusehauptkörpers (31) an dem Motorgehäuse; und
einen inneren Befestigungsabschnitt (37, 38) zum Befestigen des Gehäusehauptkörpers (31) an dem Stator (10),
bezüglich einer radialen Richtung des Stators (10) ist der äußere Befestigungsabschnitt (35, 36) außerhalb einer Außenumfangskante des Stators (10) angeordnet, während der äußere Befestigungsabschnitt (35, 36) bezüglich der Umfangsrichtung außerhalb des Magnetsensorelements (H) angeordnet ist, das sich bezüglich der Umfangsrichtung am weitesten außen befindet.

11. Die drehende elektrische Maschine gemäß Anspruch 10, bei der
der äußere Befestigungsabschnitt (35, 36) in Form eines Erstreckungsabschnitts (25) gebildet ist, der sich von dem Gehäusehauptkörper (31) in der Umfangsrichtung erstreckt.

12. Die drehende elektrische Maschine gemäß Anspruch 10, bei der
der äußere Befestigungsabschnitt (35, 36) einen in einem ersten Erstreckungsabschnitt (32) vorgesehenen ersten äußeren Befestigungsabschnitt (35) und einen in einem zweiten Erstreckungsabschnitt (33) vorgesehenen zweiten äußeren Befestigungsabschnitt (36) umfasst, wobei sich der erste Erstreckungsabschnitt (32) von dem Gehäusehauptkörper (31) in der Umfangsrichtung hin zu einer Richtung erstreckt, wobei sich der zweite Erstreckungsabschnitt (33) von dem Gehäusehauptkörper (31) in der Umfangsrichtung hin zu der anderen Richtung erstreckt.

13. Die drehende elektrische Maschine gemäß Anspruch 10, bei der
die Magnetsensoreinheit (30) einen nach innen gerichteten Erstreckungsabschnitt (34) umfasst, der sich von dem Gehäusehauptkörper (31) bezüglich der radialen Richtung nach innen erstreckt,
der innere Befestigungsabschnitt (37, 38) in einem inneren Umfassungskantenabschnitt des nach innen gerichteten Erstreckungsabschnitts (34) vorgesehen ist.

14. Ein Fahrzeug vom auf einem Sattel zu fahrenden Typ, das folgende Merkmale aufweist:
einen Motor (E); und
die drehende elektrische Maschine (SG) gemäß einem der Ansprüche 1 bis 13.

## Revendications

1. Machine électrique rotative comprenant:
un rotor (20) configuré pour être fixé à une section d'extrémité d'une partie d'arbre de rotation (1) d'un moteur (E), le rotor (20) se présentant sous forme d'un tube avec un fond;
un stator (10) disposé à l'intérieur du rotor (20); et
une unité de capteur magnétique (30) configurée pour détecter une position de rotation du rotor (20),
le stator (10) comportant une pluralité de dents (13) qui s'étendent dans une direction radiale de la partie d'arbre de rotation (1), la pluralité de dents (13) étant disposée dans une direction circonférentielle de la partie d'arbre de rotation (1),
le rotor (20) comportant une section de paroi inférieure (23) présentant une forme de disque, une section de paroi périphérique (24) présentant une forme tubulaire, et un aimant permanent (MG), la section de paroi inférieure (23) étant fixée à la partie d'arbre de rotation (1), la section de paroi périphérique (24) s'étendant dans une direction axiale de la partie d'arbre de rotation (1) d'un bord circonférentiel extérieur de la section de paroi inférieure (23) vers le moteur (E), l'aimant permanent (MG) étant fixé à une surface circonférentielle intérieure de la section de paroi périphérique (24),
l'unité de capteur magnétique (30) comportant un corps principal de carter (31) et un élément capteur magnétique (H) incorporé dans le corps principal de carter (31),
**caractérisée par le fait que**
l'aimant permanent (MG) comporte une section de prolongement (25) qui s'étend en direction axiale vers le moteur (E) au-delà d'une surface d'extrémité d'un côté du moteur des dents (13),
l'élément capteur magnétique (H) étant disposé plus près du moteur (E) qu'une surface d'extrémité du côté du moteur de la section de prolongement (25) de l'aimant permanent (MG) ne l'est du moteur (E),
l'élément capteur magnétique (H) est disposé de sorte que l'élément capteur magnétique (H) soit au moins partiellement situé dans une plage de ±g en direction radiale à partir d'une surface d'extrémité circonférentielle intérieure de l'aimant permanent (MG), où g représente une longueur d'interstice par rapport à la direction radiale entre une surface d'extrémité circonférentielle extérieure des dents (13) et la surface d'extrémité circonférentielle intérieure de l'aimant permanent (MG).

2. Machine électrique rotative selon la revendication 1, dans laquelle
l'unité de capteur magnétique (30) comporte une partie de patte de réglage de position (39) qui s'étend à partir du corps principal de carter (31) vers les dents (13),
la partie de patte de réglage de position (39) est en contact avec les dents (13) de sorte que la position de l'unité de capteur magnétique (30) soit réglée par rapport à la direction axiale.

3. Machine électrique rotative selon la revendication 2, dans laquelle
la partie de patte de réglage de position (39) est réalisée uniquement à partir d'un corps non magnétique.

4. Machine électrique rotative selon la revendication 2 ou 3, dans
laquelle
la partie de patte de réglage de position (39) est disposée en une position plus proche de la surface d'extrémité circonférentielle intérieure de l'aimant permanent (MG) que de la ligne d'axe de la partie d'arbre de rotation (1).

5. Machine électrique rotative selon l'une quelconque des revendications 1 à 4, dans laquelle
la section de prolongement (25) est prévue dans chacune des sections d'extrémité opposées de l'aimant permanent (MG) par rapport à la direction circonférentielle, et une section évidée (26) est formée entre les sections de prolongement (25).

6. Machine électrique rotative selon la revendication 2, dans laquelle
chaque dent (13) comporte une paire de sections faisant saillie latéralement (13b) qui s'étendent dans la direction circonférentielle à partir de l'extrémité distale de la dent (13) par rapport à la direction radiale,
la partie de patte de réglage de position (39) de l'unité de capteur magnétique (30) est montée entre des sections voisines des sections (13b) faisant saillie latéralement formées par paires.

7. Machine électrique rotative selon la revendication 6, dans laquelle
la partie de patte de réglage de position (39) comporte une section principale de patte (39a) et une section de verrou (39b) qui est prévue sur une section d'extrémité distale de la section principale de patte (39a), la section de verrou (39b) présentant une largeur plus petite que la largeur de la section principale de patte (39a),
la section de verrou (39b) est montée entre les sections faisant saillie latéralement (13b) formées par paires, les sections faisant saillie latéralement (13b) étant voisines l'une de l'autre par rapport à la direction circonférentielle, de sorte que la position du corps principal de carter (31) soit réglée par rapport à la direction circonférentielle,
une partie formant gradin (39c) prévue à la limite entre la section principale de patte (39a) et la section de verrou (39b) est verrouillée aux parties voisines des sections faisant saillie latéralement (13b) formées par paires, pour empêcher le mouvement du corps principal de carter (31) dans la direction axiale.

8. Machine électrique rotative selon l'une quelconque des revendications 1 à 7, dans laquelle
l'élément capteur magnétique (H) est un CI de Hall de type à commutation.

9. Machine électrique rotative selon l'une quelconque des revendications 1 à 8, dans laquelle
la dimension axiale de la section de prolongement (25) de l'aimant permanent (MG) est plus grande qu'une dimension équivalente à l'épaisseur de l'aimant permanent (MG).

10. Machine électrique rotative selon l'une quelconque des revendications 1 à 9, dans laquelle
l'unité de capteur magnétique (30) comporte par ailleurs:
une section de fixation extérieure (35, 36) destinée à fixer le corps principal de carter (31) au carter de moteur; et
une section de fixation intérieure (37, 38) destinée à fixer le corps principal de carter (31) au stator (10),
par rapport à une direction radiale du stator (10), la section de fixation extérieure (35, 36) est disposée à l'extérieur d'un bord circonférentiel extérieur du stator (10), tandis que, par rapport à la direction circonférentielle, la section de fixation extérieure (35, 36) est disposée à l'extérieur de l'élément capteur magnétique (H) qui est situé le plus à l'extérieur par rapport à la direction circonférentielle.

11. Machine électrique rotative selon la revendication 10, dans
laquelle
la section de fixation extérieure (35, 36) est réalisée sous forme d'une section de prolongement (25) s'étendant dans la direction circonférentielle à partir du corps principal de carter (31).

12. Machine électrique rotative selon la revendication 10, dans
laquelle la section de fixation extérieure (35, 36) comporte une première section de fixation extérieure (35) prévue dans une première section de prolongement (32) et une deuxième section de fixation extérieure (36) prévue dans une deuxième section de prolongement (33), la première section de prolongement (32) s'étendant à partir du corps principal de carter (31) vers une direction dans la direction circonférentielle, la deuxième section de prolongement (33) s'étendant à partir du corps principal de carter (31) vers l'autre direction dans la direction circonférentielle.

13. Machine électrique rotative selon la revendication 10, dans
laquelle
l'unité de capteur magnétique (30) comporte une section de prolongement vers l'intérieur (34) qui s'étend à partir corps principal de carter (31) vers l'intérieur par rapport à la direction radiale,
la section de fixation intérieure (37, 38) est prévue dans une section de bord périphérique intérieure de la section de prolongement vers l'intérieur (34).

14. Véhicule de type à selle, comprenant:
un moteur (E); et
la machine électrique rotative (SG) selon l'une quelconque des revendications 1 à 13.
